# FASCICULE DE BREVET EUROPEEN

(11) **EP 0 730 945 B1**
(45) Date de publication et mention de la délivrance du brevet: **17.11.1999**
(21) Numéro de dépôt: 96440022.0
(22) Date de dépôt: 05.03.1996
(51) Int. Cl.: B29C 63/02, B29C 65/02, B29C 65/14, B29C 65/52, C09J 5/06, F16B 19/00, B29C 31/00, B68G 7/05

(54) **Procédé de solidarisation par collage d'une coiffe sur une matelassure en forme, notamment en mousse de polyuréthane**
Verfahren zum Verbinden einer Schutzhülle auf ein Schaumstoffkissen, insbesondere aus Polyurethanschaumstoff
Method for glueing a cover material on a foam cushion, particularly polyurethane foam cushion

(30) Priorité: 06.03.1995 FR 9502736; 09.06.1995 FR 9507032
(43) Date de publication de la demande: 11.09.1996
(73) Titulaire: JOHNSON CONTROLS - ROTH, 67100 Strasbourg Meinau (FR)
(72) Inventeur: Roth, Jacques, 67000 Strasbourg (FR); Manigold, Alain, 67310 Romanswiller (FR)
(74) Mandataire: Nuss, Pierre

(56) Documents cités:
- EP-A- 0 169 188
- EP-A- 0 442 691
- WO-A-92/08601
- FR-A- 2 558 147
- GB-A- 2 192 334
- GB-A- 2 202 434
- US-A- 4 929 304
- PATENT ABSTRACTS OF JAPAN vol. 015, no. 228 (M-1123), 11 Juin 1991 & JP 03 068391 A (ARACO CORP;OTHERS: 01), 25 Mars 1991,
- PATENT ABSTRACTS OF JAPAN vol. 012, no. 501 (C-556), 27 Décembre 1988 & JP 63 213587 A (KAWASHIMA ORIMONO:KK;OTHERS: 01), 6 Septembre 1988,

## Description

La présente invention concerne le domaine de la réalisation de matelassures en forme, en particulier pour coussins de siège et a pour objet un procédé de solidarisation par collage d'une coiffe sur une matelassure en forme, notamment en mousse de polyuréthane, en particulier pour la réalisation de coussins de siège.

La disposition d'une coiffe de coussin de siège dans un moule ou un conformateur, la face visible de la coiffe épousant les parois internes dudit moule ou conformateur, une matelassure en forme en mousse ou matière analogue préalablement enduite de colle étant appliquée avec une certaine pression sur les parois internes de la coiffe ainsi disposée, permet l'obtention, après durcissement de la colle, d'un coussin en mousse sur lequel la coiffe adhère grâce à la colle en épousant par conséquent tous les contours et reliefs de ladite matelassure de mousse.

Mais le bon collage de la matelassure en forme, notamment en mousse polyuréthane moulée, est dépendant de la qualité de la fine peau de moulage constituant la surface de toute matelassure de mousse polyuréthane moulée.

Ainsi, une matelassure en mousse moulée dite mousse à froid (cold cure foam), pour laquelle l'agent de démoulage déposé dans le moule est une cire en solution dans un solvant, présente une peau de surface perméable et largement poreuse favorable à une bonne adhérence lors de l'opération de collage de la matelassure de mousse sur la coiffe.

Par contre, une matelassure en mousse moulée dite mousse à chaud (hot cure foam), pour laquelle l'agent de démoulage déposé dans le moule serait de surcroît une cire en dispersion acqueuse, présente une peau de surface relativement épaisse, lisse et faiblement perméable, ce qui est très défavorable à une bonne adhérence lors de l'opération de collage de la matelassure de mousse sur la coiffe et nécessite une élimination par brossage de ladite peau préalablement à l'opération de collage.

Par ailleurs, une industrialisation économique du procédé susvisé nécessite d'écourter au maximum le temps de durcissement par séchage, vulcanisation ou polymérisation de la colle.

Le procédé de solidarisation le plus couramment utilisé actuellement consiste à porter le moule ou le conformateur à une température relativement haute, à savoir de l'ordre de 80 degrés à 120 degrés centigrades, de sorte que lorsque la matelassure enduite de colle est appliquée contre la coiffe tapissant le moule ou le conformateur, la température du moule ou conformateur se propage à travers le tissu jusqu'à la colle, déterminant ainsi le durcissement de ladite colle.

Ce procédé connu présente néanmoins deux graves inconvénients.

D'une part, le temps de propagation de la chaleur du moule ou conformateur à travers le tissu est long, surtout dans le cas d'utilisation d'un tissu doublé d'une mince feuille de mousse présentant en général une épaisseur de l'ordre de 2 mm à 5 mm. Dans ces conditions, même avec des colles polyuréthane à polymérisation rapide, le temps de durcissement de la colle est compris entre 40 secondes et 120 secondes, ce qui implique une immobilisation de l'outil conformateur et par là même un coût de fabrication élevé.

D'autre part, le fait que la face visible de la coiffe est forcément appliquée contre les parois d'un moule ou conformateur chauffé provoque inévitablement des dégradations du matériau constituant la coiffe, ce qui a pour effet une brillance et un effacement du grain pour les similicuirs en PVC, des marquages, des moirures indésirables, des couchages des poils dans le cas de textiles velours, jersey, etc. Il en résulte que des opérations dites de délustrage à la brosse ou à la vapeur sont alors nécessaires.

Ces inconvénients ne peuvent être atténués que par une réduction de la température du moule ou conformateur, ce qui conduit simultanément à une augmentation du temps de durcissement de la colle qui peut alors atteindre 180 secondes.

Il a également été proposé de transférer de façon plus rapide la température vers la colle afin de raccourcir le temps de durcissement de cette dernière.

Ce procédé consiste à faire passer de la vapeur sèche à une température comprise entre 150 degrés et 300 degrés centigrades à travers la matelassure de mousse, à travers la coiffe, puis à travers des perforations pratiquées dans le fond du moule ou conformateur.

De cette façon, la haute température de la vapeur sèche atteint plus rapidement la colle, dont le temps de durcissement est réduit à environ 30 secondes.

Toutefois, ce procédé présente également des inconvénients.

En effet, la vapeur introduite dans le coussin doit être évacuée, ce qui oblige à raccorder le fond du moule ou conformateur à une source de vide, qui aspire ladite vapeur puis l'air extérieur, afin de refroidir et sécher l'intérieur du coussin. Les temps additionnés d'évacuation de la vapeur, de séchage et de durcissement de la colle conduisent, par conséquent, à une opéraition relativement longue et coûteuse en investissement ayant pour conséquence un coût de fabrication élevé. Enfin, la vapeur sèche à haute température, qui traverse le textile, peut également provoquer des dégradations dudit textile.

En outre, lorsque la coiffe est constituée d'un matériau étanche tel qu'un similicuir en PVC ou un textile imperméable, le procédé est inopérant car la vapeur ne peut pas traverser la coiffe.

On connaît du document US-A-4 929 304 un dispositif rotatif à barillet permettant la mise en place d'une coiffe et d'un coussin par un procédé de collage tout à fait classique.

Le procédé préférentiel selon ce document consiste à disposer la coiffe dans un moule-conformateur chaud, à enduire ensuite par aspersion la matelassure de mousse avec de la colle, puis à abaisser le plateau presseur soutenant la matelassure de mousse contre la coiffe et à déterminer la polymérisation de la colle grâce à la chaleur que lui communique le conformateur chauffant.

Dans un autre mode de réalisation, un film adhésif thermofusible, en l'occurrence un thermoplastique, est utilisé, après avoir été chauffé, pour coller la mousse sur la coiffe. Pour chauffer ce film thermoplastique et pour le faire fondre afin de le transformer en colle, il est suggéré de chauffer la matelassure de mousse à l'aide d'un mécanisme de chaleur irradiante puis, après chauffage, de manoeuvrer le système à barillet, d'abaisser la matelassure de mousse contre le film thermofusible puis contre la coiffe en vue d'obtenir la fusion du film par la chaleur résiduelle de la matelassure de mousse.

La présente invention a pour but de pallier ces inconvénients.

Elle a, en effet, pour objet un procédé de solidarisation par collage d'une coiffe sur une matelassure en forme, notamment en mousse de polyuréthane, en particulier pour la réalisation de coussins de siège, qui consiste essentiellement à disposer une coiffe dans un conformateur froid et à la fixer à ce dernier au moyen d'un cadre de maintien, puis à appliquer indirectement une colle sur les parois internes de la coiffe par transfert d'une partie de ladite colle préalablement appliquée par pulvérisation sur la matelassure de mousse lors d'une brève mise en contact de cette dernière avec les parois internes de la coiffe, à chauffer ensuite rapidement à haute température non seulement la surface de la matelassure destinée à coopérer avec les parois internes de la coiffe, mais aussi simultanément à la même température la couche de colle demeurée sur ladite matelassure de mousse, ce qui, d'une part, provoque la fusion de la couche de cire constituant l'essentiel de la peau de moulage de ladite matelassure de mousse, et, d'autre part, polymérise ladite couche de colle pour former une surface d'accrochage qui favorisera grandement le futur collage, à interrompre le chauffage après atteinte d'une température prédéterminée et à appliquer immédiatement la matelassure de mousse ainsi chauffée sur les parois internes de la coiffe enduites de la colle, de manière à réaliser une transmission instantanée de chaleur par contact direct avec la colle entraînant un durcissement extrêmement rapide de celle-ci, puis à ouvrir le conformateur froid et à retirer la matelassure munie de sa coiffe.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 représente, en coupe, le positionnement d'une coiffe sur un conformateur équipé d'un cadre de maintien selon un premier mode de réalisation ;
la figure 2 représente, dans une vue analogue à celle de la figure 1, l'opération d'application de la colle sur la face interne de la coiffe ;
la figure 3 est une vue analogue à celle de la figure 1, une fois la face interne de la coiffe encollée ;
la figure 4 est une vue analogue à celle des figures 1 et 3, représentant l'opération de chauffage de la surface de la matelassure ;
la figure 5 est une vue à plus petite échelle, analogue à celle des figures 1 à 4, représentant l'application de la matelassure sur la face interne de la coiffe ;
la figure 6 est une vue en coupe représentant l'ouverture du conformateur après solidarisation de la coiffe;
la figure 7 représente, en coupe, le positionnement d'une coiffe sur un conformateur équipé d'un cadre de maintien selon un second mode de réalisation ;
la figure 8 représente, dans une vue analogue à celle de la figure 7, l'opération d'application de la colle sur la face interne de la coiffe ;
la figure 9 est une vue analogue à celle des figures 7 et 8, représentant l'opération de chauffage de la surface de la matelassure ;
la figure 10 est une vue a plus petite échelle, analogue à celle des figures 7 à 9, représentant l'application de la matelassure sur la face interne de la coiffe ;
la figure 11 est une vue en coupe représentant l'ouverture du conformateur après solidarisation de la coiffe ;
la figure 12 est une vue en coupe d'un coussin garni de sa coiffe ;
la figure 13 est une vue en perspective d'un moule servant au moulage d'une matelassure munie de moyens de positionnement et de verrouillage, et
les figures 14 et 15 sont des vues en coupe illustrant respectivement le positionnement et le verrouillage de la matelassure de mousse sur un plateau porteur.

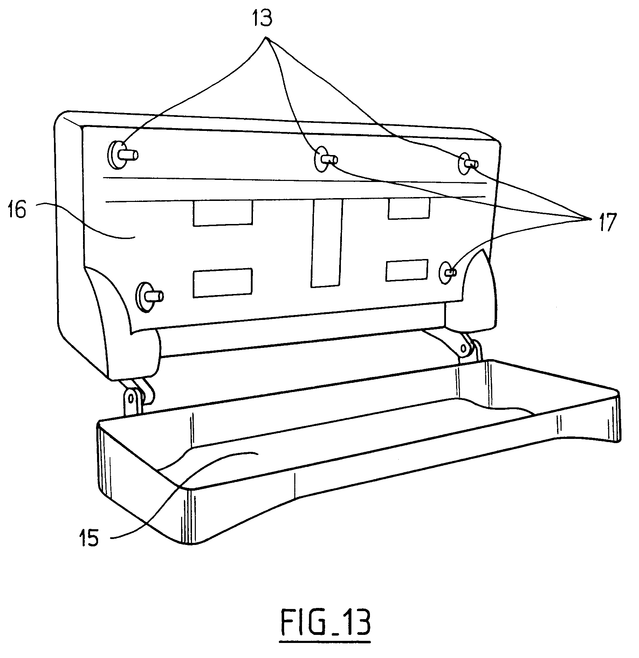

Le mode de réalisation représenté aux figures 13 à 15 ne fait cependant pas partie de l'invention en tant que telle.

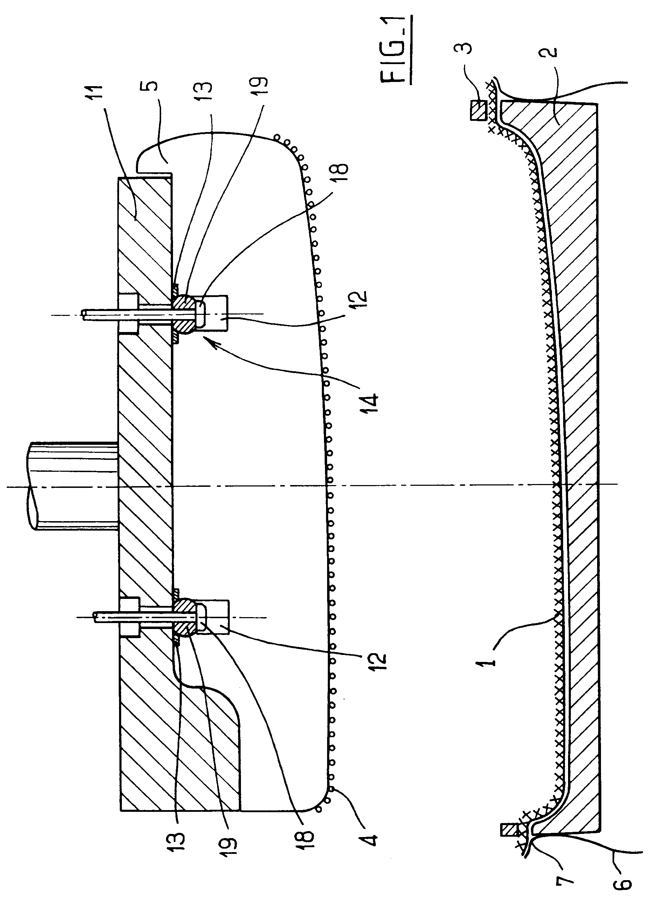

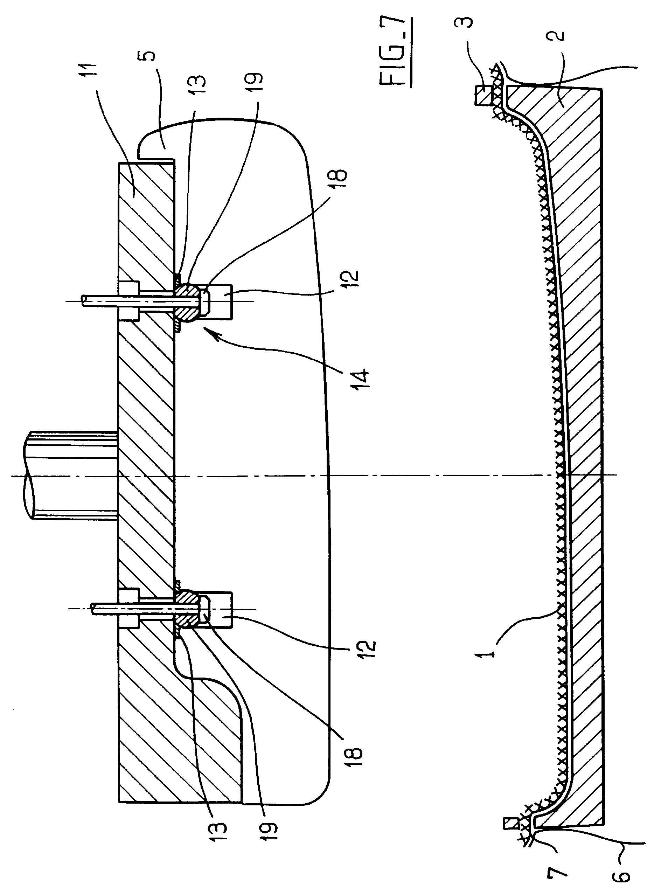

Conformément à l'invention et comme le montrent plus particulièrement, à titre d'exemple, les figures 1 à 12 des dessins annexés, le procédé de solidarisation par collage d'une coiffe sur une matelassure en forme, notamment en mousse de polyuréthane, en particulier pour la réalisation de coussins de siège, consiste essentiellement à disposer une coiffe 1 dans un conformateur froid 2 et à la fixer à ce dernier au moyen d'un cadre de maintien 3, puis à appliquer indirectement une colle 4 sur les parois internes de la coiffe 1 par transfert d'une partie de ladite colle 4 préalablement appliquée par pulvérisation sur la matelassure de mousse 5 lors d'une brève mise en contact de cette dernière avec les parois internes de la coiffe 1, à chauffer ensuite rapidement à haute température non seulement la surface de la matelassure 5 destinée à coopérer avec les parois internes de la coiffe 1, mais aussi simultanément à la même température la couche de colle 4 demeurée sur ladite matelassure de mousse 5, ce qui, d'une part, provoque la fusion de la couche de cire constituant l'essentiel de la peau de moulage de ladite matelassure de mousse 5, et, d'autre part, polymérise ladite couche de colle pour former une surface d'accrochage qui favorisera grandement le futur collage, à interrompre le chauffage après atteinte d'une température prédéterminée et à appliquer immédiatement la matelassure de mousse 5 ainsi chauffée sur les parois internes de la coiffe 1 enduites de la colle 4, de manière à réaliser une transmission instantanée de chaleur par contact direct avec la colle 4 entraînant un durcissement extrêmement rapide de celle-ci, puis à ouvrir le conformateur froid 2 et à retirer la matelassure 5 munie de sa coiffe 1.

Le conformateur froid 2 peut être fabriqué indifféremment en matière synthétique, en tôle, en fonte ou en différents composites.

Dans l'exemple représenté aux dessins annexés, la coiffe 1 peut être constituée par un textile doublé d'une feuille de mousse de polyuréthane souple d'une épaisseur comprise entre 2 mm et 5 mm, la partie correspondant à la périphérie du coussin étant constituée par une feuille de similicuir en PVC 6 cousue au textile selon une ligne de couture 7. Cette coiffe 1 est positionnée sur le conformateur 2 et maintenue en place par le cadre de maintien 3.

Selon un premier mode de réalisation de l'invention et comme le montrent schématiquement les figures 1 à 3, l'application de la colle 4 est effectuée indirectement par transfert d'une partie de ladite colle 4 préalablement appliquée par pulvérisation sur la matelassure de mousse 5 lors d'une brève mise en contact de cette dernière avec les parois internes de la coiffe 1.

La colle 4 est tout d'abord appliquée par pulvérisation au moyen d'un pistolet sur la surface de la matelassure de mousse 5 à un poste d'aspersion séparé et dédié à cette opération, par exemple dans une cabine d'aspersion semblable à une cabine de peinture.

La quantité de colle déposée sur la surface de la matelassure de mousse 5 est comprise entre 40 grammes et 60 grammes au mètre carré.

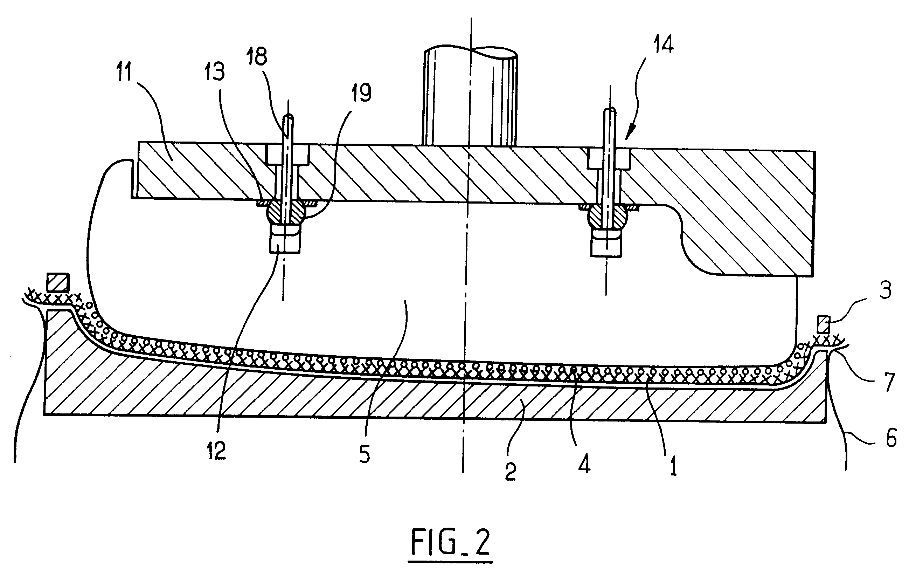

La figure 1 représente schématiquement un plateau porteur 11 et une matelassure de mousse 5 enduite de colle humide, qui y est verrouillée. La matelassure 5 est alors abaissée au moyen du plateau porteur 11 au contact du conformateur 2 contenant la coiffe 1 (figure 2). Ainsi, la matelassure de mousse 5 enduite de colle humide est mise un court instant, à savoir 0,5 à 2 secondes, au contact des parois internes de la coiffe 1, ce qui a pour effet de transférer une partie de ladite colle sur lesdites parois internes de la coiffe 1.

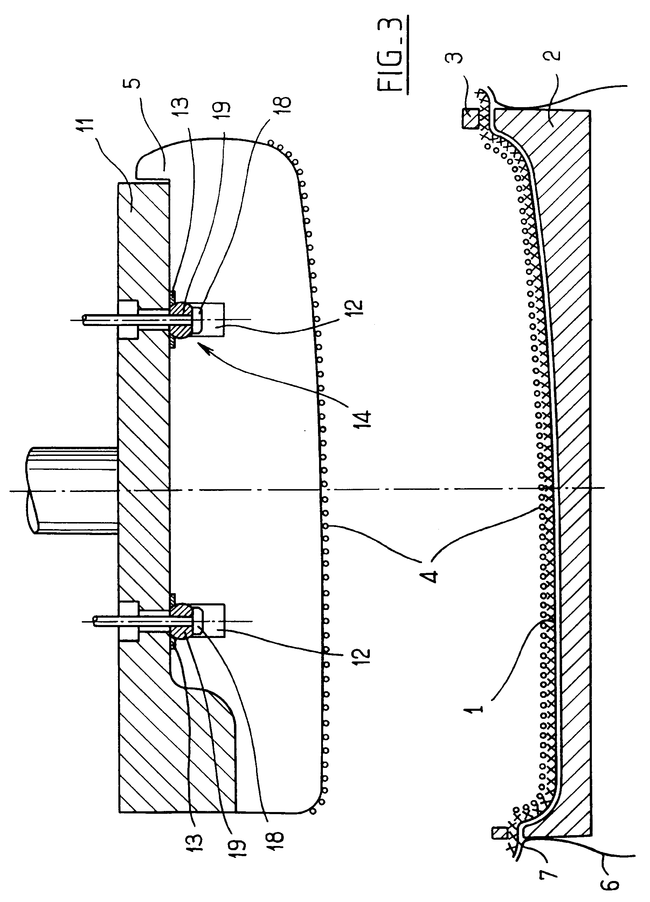

Après ce court instant, le plateau porteur 11 est remonté (figure 3), une partie de la colle ayant été transférée sur les parois internes de la coiffe 1, une autre partie de la colle subsistant sur la surface de la matelassure de mousse 5. En fait, seul un quart à un tiers de la quantité de colle est transféré durant ce court temps de contact de la matelassure de mousse 5 vers les parois internes de la coiffe 1. En conséquence, conformément à ce premier mode de réalisation de l'invention, la quantité de colle initialement déposée sur la matelassure de mousse 5 étant comprise entre 40 grammes et 60 grammes au mètre carré, seule une quantité de 10 grammes à 20 grammes au mètre carré de ladite colle aura été transférée sur les parois internes de la coiffe 1, une quantité de colle de 30 grammes à 40 grammes au mètre carré demeurant sur la matelassure de mousse 5.

C'est cette très faible quantité de colle de 10 grammes à 20 grammes au mètre carré, très uniformément déposée sur les parois internes de la coiffe 1 qui, conformément à l'invention, permettra un excellent collage tout en éliminant les risques de défauts par collapsage de la doublure de mousse de ladite coiffe 1.

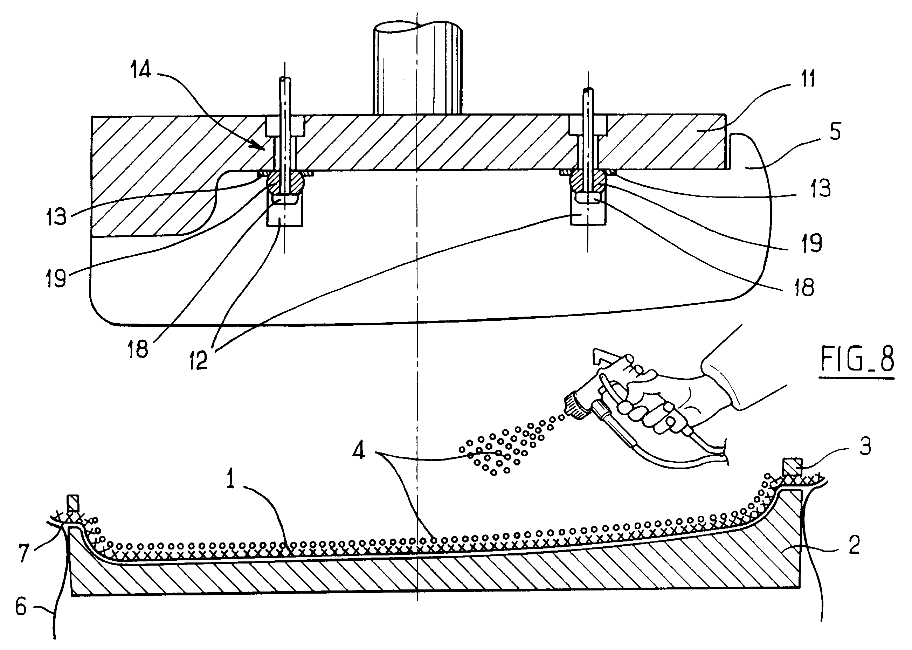

Selon un second mode de réalisation de l'invention et comme le montre schématiquement la figure 8, l'application de la colle 4 est effectuée directement au moyen d'un pistolet, par pulvérisation sur les parois internes de la coiffe 1, notamment aux endroits qui devront être solidarisés avec la matelassure de mousse 5, de façon à déposer sur la doublure de mousse de ladite coiffe 1 une très fine couche de colle 4.

La quantité de colle ainsi déposée sera préférentiellement comprise entre 40 grammes et 60 grammes au mètre carré.

A titre d'exemple, la colle utilisée sera avantageusement une colle de polyuréthane à 100 % d'extraits secs et à deux composants, à savoir 70 % en poids de polyol d'un poids moléculaire de 6000 et d'indice hydroxyle 28, tel que celui connu sous la dénomination commerciale BAYER 3963 de la société BAYER ou un autre polyol de type triol, et 30 % en poids d'isocyanate de type MDI, le mélange étant activé avec un catalyseur aminé de type T.E.D.A. Dans ce cas, un système de pulvérisation par pistolage à deux composants sera préférentiellement utilisé.

Bien entendu, d'autres colles pourraient être utilisées telles que, par exemple, des colles polyuréthane monocomposant à 100 % d'extraits secs ou additionnées de solvants, des colles de caoutchouc en phase aqueuse ou solvant, des colles de type thermodurcissable ou thermoplastique.

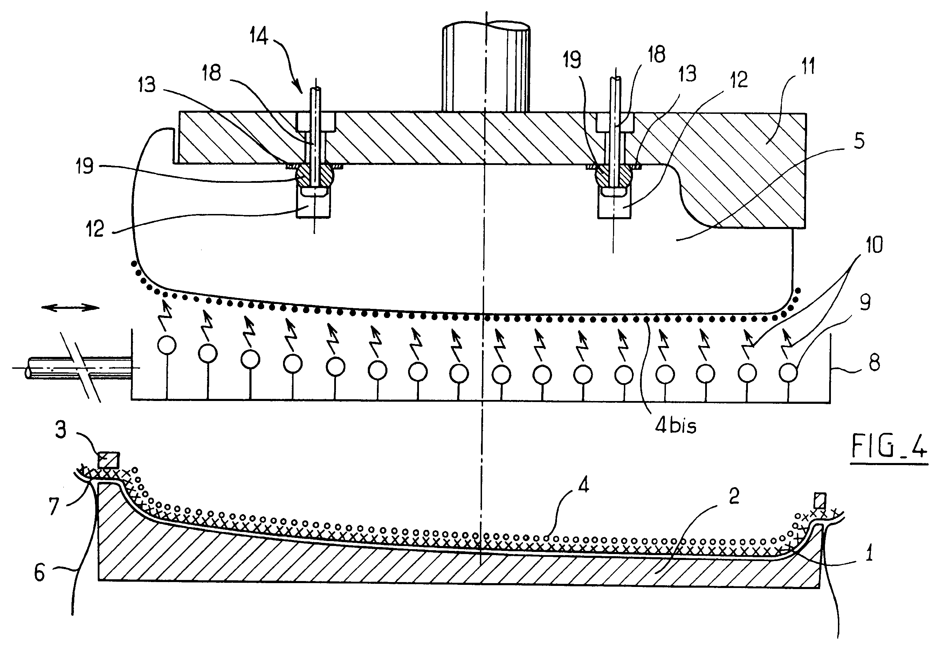

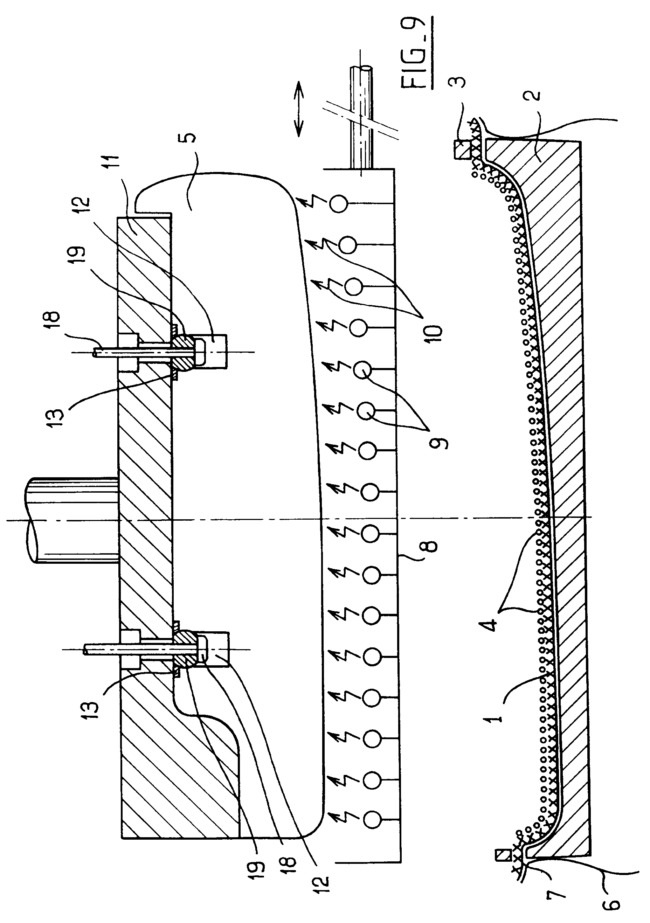

Les figures 4 et 9 représentent schématiquement le chauffage rapide de la surface de la matelassure de mousse 5, afin de la porter à une température de l'ordre de 170 degrés à 190 degrés centigrades.

A cet effet, l'invention met en oeuvre un caisson 8, dans lequel sont montés des lampes ou des tubes infrarouges 9 portés à une température comprise entre 1 000 degrés à 1 400 degrés centigrades et montés sur des supports réglables par rapport au fond du caisson 8 de manière à être tous à égale distance de la surface de la mousse constituant la matelassure 5.

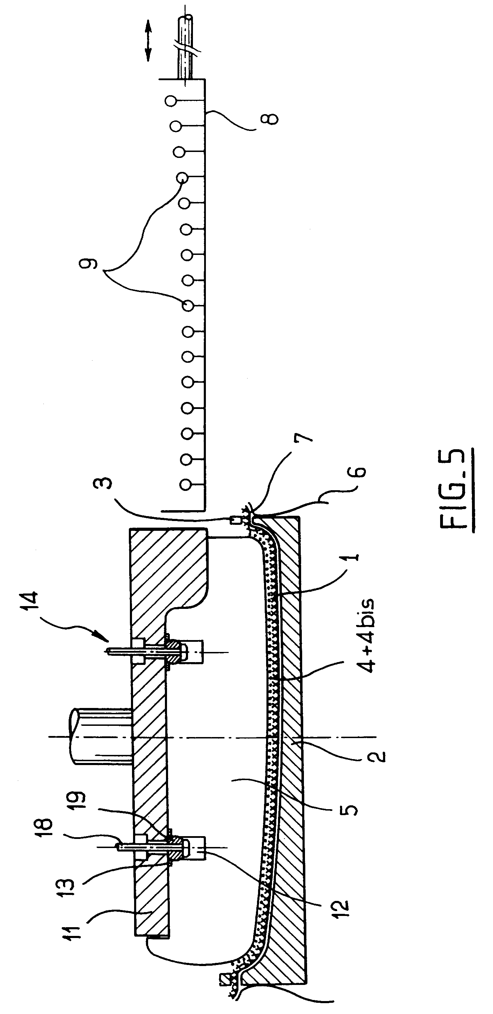

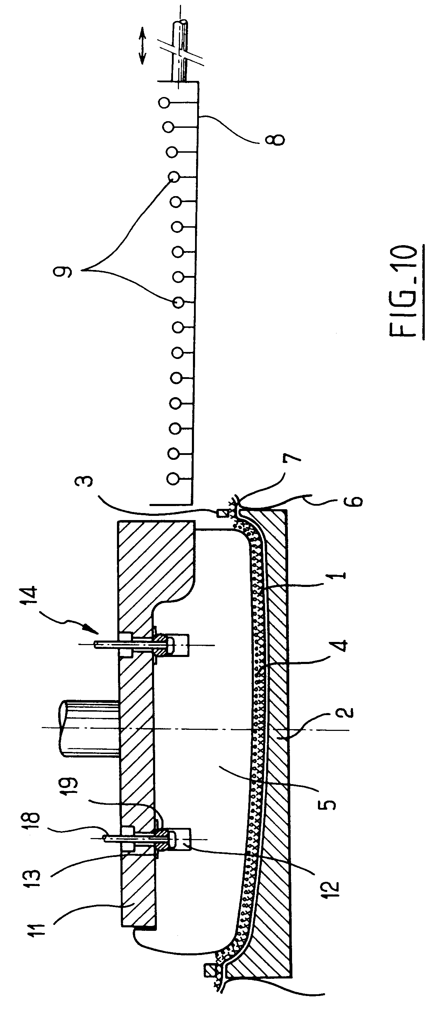

Selon une caractéristique de l'invention, le caisson 8 est avantageusement monté déplaçable à la manière d'un tiroir entre la surface de la matelassure de mousse 5 et le conformateur 2, les tubes ou lampes infrarouges 9 étant alimentés par un dispositif déconnectable à chaque retrait du caisson 8 de sa position entre la matelassure 5 et le conformateur 2. Ainsi, le dispositif déconnectable permet une mise sous tension instantanée des lampes ou tubes 9 à chaque insertion du caisson 8, leur alimentation étant automatiquement coupée lors du retrait dudit caisson 8 (figures 5 et 10).

Les lampes ou tubes infrarouges 9 portés à 1 300 degrés centigrades émettent un rayonnement 10 qui, après une durée comprise entre 2 secondes et 10 secondes, porte la surface de la mousse formant la matelassure 5 à une température de l'ordre de 170 degrés à 190 degrés centigrades.

Ainsi, dans le premier mode de réalisation, le rayonnement 10 porte également la colle 4 demeurée sur la matelassure de mousse 5 à la même température de 170 degrés à 190 degrés centigrades. Ceci a pour premier effet de provoquer la fusion de la couche de cire commune aux surfaces de toutes matelassures de mousse telle la matelassure de mousse 5 et constituant l'essentiel de sa peau de moulage, cette cire en fusion étant dès lors absorbée au sein de la couche de colle et, par la même, totalement neutralisée, c'est-à-dire quasiment éliminée. Ceci a, concomitamment, pour deuxième effet, de polymériser ladite couche de colle à très haute température pour former une couche sèche légèrement grumeleuse 4bis solidaire de la surface cellulaire de la matelassure de mousse 5 et qui constitue, tel un apprêt, une surface d'accrochage qui favorisera grandement le futur collage.

Conformément à une autre caractéristique de l'invention, la mousse constituant la matelassure 5 présente une coloration foncée, préférentiellement gris foncé, conférée à la mousse par addition d'un colorant noir constitué avantageusement de noir de carbone empâté dans un polyol, à raison de 0,1 à 1 partie de colorant pour 100 parties de polyol, pour une mousse de polyuréthane. Cette coloration est destinée à apporter à la mousse un pouvoir d'absorption calorifique suffisant et, de ce fait, un bon volant thermique. Ainsi, la température de 170 degrés à 190 degrés centigrades, à laquelle est portée la surface de la matelassure en mousse 5 peut être obtenue plus facilement.

En effet, la coloration en gris foncé de la mousse augmente l'émissivité de celle-ci par réduction de la réflexion de l'énergie incidente et, par là même, augmente la quantité d'énergie absorbée par la mousse, ce qui détermine un volant thermique de la mousse ainsi chauffée. Ce volant thermique est tel que la température ainsi absorbée est exploitable pendant une durée pouvant atteindre 10 secondes, c'est-à-dire qu'elle est encore suffisamment élevée pour permettre un durcissement rapide de la colle lors de l'application de la matelassure 5 sur les parois internes de la coiffe 1 enduites de la colle 4, dans le conformateur froid 2.

Les lampes ou plus généralement les tubes 9 sont préférentiellement des émetteurs infrarouges en quartz à filament de tungstène, qui émettent un rayonnement infrarouge court de haute intensité, dont la puissance est de 3 000 watts par tube, tels que, par exemple, des tubes de marque Philips. Ces tubes sont positionnés à une distance de 50 mm à 200 mm de la surface de la matelassure de mousse 5 en fonction de l'émissivité de la mousse colorée en gris foncé.

Les figures 5 et 10 représentent schématiquement le plateau porteur 11 et une matelassure de mousse 5, qui y est verrouillée. La matelassure 5 est abaissée au moyen du plateau porteur 11 au contact du conformateur 2 contenant la coiffe encollée 1. Pour ce faire, le caisson 8, fonctionnant dans l'exemple comme un tiroir, est retiré en 1 à 2 secondes, tandis que les tubes ou lampes infrarouges 9 s'éteignent simultanément. Le plateau porteur 11 est alors abaissé en 3 secondes à 4 secondes, de sorte que le temps total entre l'arrêt du chauffage et la mise en contact de la matelassure de mousse 5, le cas échéant recouverte de la couche de colle polymérisée formant apprêt 4bis (premier mode de réalisation) avec la coiffe 1 recouverte de colle liquide 4 est de l'ordre de 4 secondes à 6 secondes.

Ainsi, conformément au premier mode de réalisation de l'invention, grâce au volant thermique obtenu par coloration de la mousse en gris foncé et de par la densité de la colle (1 000 grammes par litre, ce qui est très supérieur à la densité de la mousse - 45 grammes par litre), la température de la couche de colle polymérisée formant apprêt 4bis, lorsqu'elle vient en contact direct avec la colle 4 déposée sur les parois internes de la coiffe 1, est encore de 120 degrés à 150 degrés centigrades. Cette température étant transmise par contact direct de façon instantanée à la colle 4 détermine ainsi un temps de polymérisation de 5 à 7 secondes de ladite colle 4. Donc, le fait de porter à très haute température non seulement la surface de la matelassure de mousse 5 colorée en gris foncé, mais également la couche de colle qui y est déposée, a pour résultat d'augmenter encore le volant thermique du fait de la densité de la colle et ainsi de diminuer le temps de chauffage et/ou de polymérisation de la colle de 10 à 20 pour cent (voir figure 5), sans que pour autant le matériau constitutif de la coiffe 1 en soit affecté, car l'énergie calorifique est quasiment entièrement absorbée par la colle 4 et la doublure de mousse, de sorte que la température de la coiffe 1 ne dépasse jamais 40 degrés centigrades.

Conformément au second mode de réalisation, grâce au volant thermique obtenu par coloration de la mousse en gris foncé, la température de la mousse, lorsqu'elle vient au contact direct avec la colle 4, est encore de 120 degrés à 140 degrés centigrades ; cette température étant transmise par contact direct de façon instantanée à la colle 4 détermine ainsi un temps de polymérisation de 5 secondes à 8 secondes, sans que pour autant le matériau constitutif de la coiffe 1 en soit affecté, car l'énergie calorifique est quasiment entièrement absorbée par la colle 4 et la doublure de mousse, de sorte que la température de la coiffe 1 ne dépasse jamais 40 degrés centigrades (voir figure 10).

Le recours au premier mode de réalisation présente un certain nombre d'avantages dont les suivants :
- La pulvérisation de la colle non pas directement dans la coiffe mais sur la matelassure de mousse permet d'éliminer tout risque de salissure aléatoire des tissus constituant la coiffe.
- La pulvérisation de la colle sur la matelassure de mousse en un lieu séparé élimine le risque d'encrassement des organes mécaniques par les aérosols de la colle.
- La très fine couche de colle déposée sur les parois internes de la coiffe par le transfert d'une très faible quantité seulement de ladite colle déposée au préalable sur la matelassure de mousse supprime totalement les risques de défauts d'aspect par collapsage de la double de mousse de la coiffe.
- Le fait de chauffer non seulement la surface de la matelassure de mousse, mais aussi la couche de colle qui est demeurée sur ladite mousse, a pour premier effet de fondre la cire constituant la peau de surface commune à toutes les matelassures en mousse de polyuréthane moulée et de la faire s'absorber au sein de la couche de colle neutralisant ainsi ladite cire et, pour deuxième effet, de polymériser concomitamment ladite couche de colle, déterminant ainsi la formation d'un apprêt légèrement grumeleux solidaire de la surface cellulaire de la matelassure de mousse et favorisant grandement l'adhérence lors de l'opération de collage. Conformément à l'invention, on peut donc indifféremment coller des matelassures moulées en mousse à froid (cold cure foam) ou en mousse à chaud (hot cure foam) ayant des peaux de moulage fines, ouvertes et perméables provenant d'agents de démoulage en solution solvant ou des peaux plus épaisses, lisses et peu perméables provenant d'agents de démoulage en dispersion acqueuse.
- Le fait de porter à très haute température non seulement la surface de la matelassure de mousse colorée en gris foncé mais également la couche de colle qui y est déposée a pour résultat d'augmenter le volant thermique du fait que la densité de la colle, à savoir 1 000 grammes par litre, est très supérieure à celle de la mousse, à savoir 45 grammes par litre, ce qui a pour conséquence de diminuer le temps de chauffage et/ou le temps de polymérisation de la colle de 10 à 20 pour cent et donc d'accélérer le cycle de production.

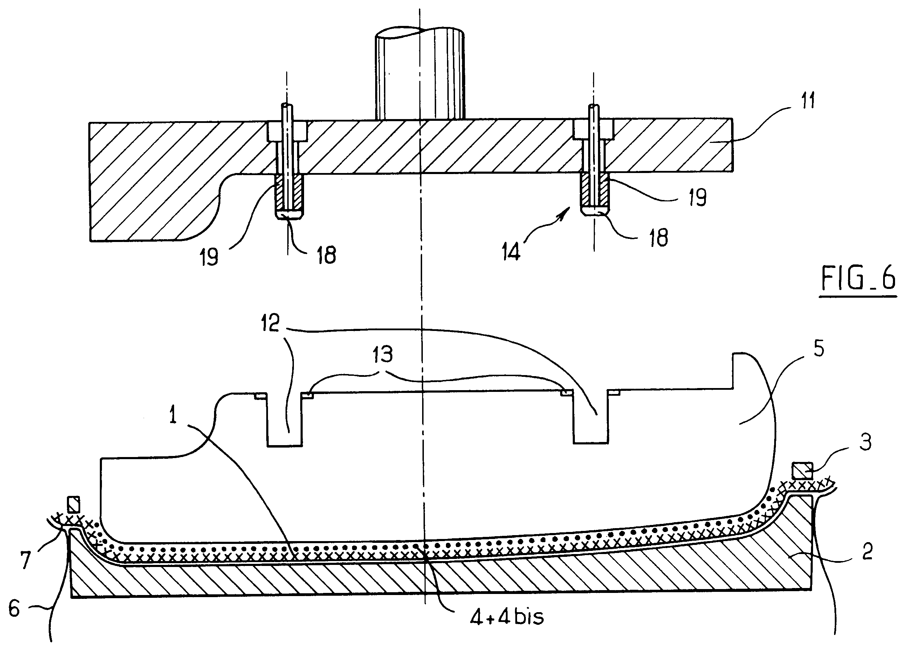

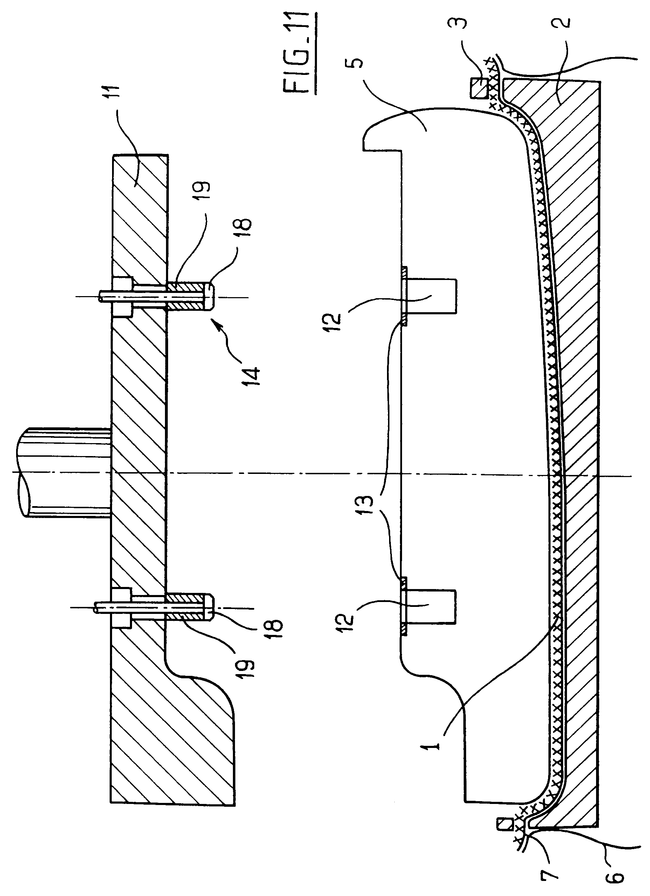

Après polymérisation de la colle et comme le montrent les figures 6 et 11, la matelassure de mousse 5 est déverrouillée du plateau porteur 11, qui est alors soulevé, libérant ainsi le coussin. Puis, le cadre 3 est ouvert et le coussin, constitué de la matelassure de mousse 5 et de la coiffe 1 qui y est collée, peut être évacué du conformateur 2.

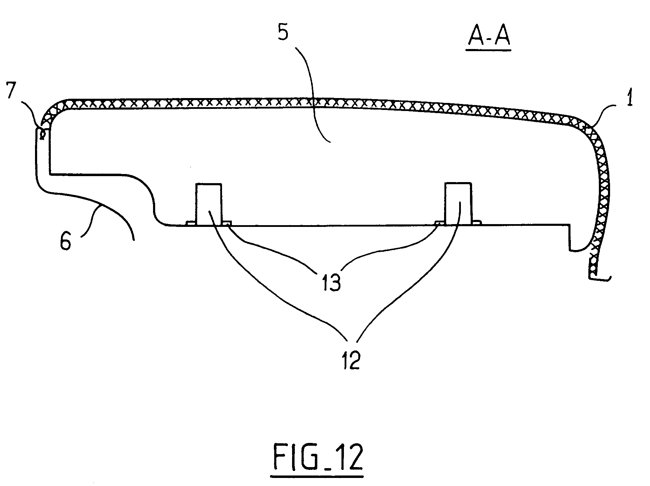

Le coussin obtenu conformément à l'invention et garni de sa coiffe est représenté à la figure 12 des dessins annexés.

Le procédé conforme à l'invention permet, du fait que le conformateur 2, dans lequel est disposée la coiffe de coussin 1, n'est pas chauffé, c'est-à-dire qu'il est à la température ambiante de l'atelier, d'exclure toute dégradation des matériaux constituant la coiffe, à savoir tissu, non-tissé, velours, similicuir en PVC ou cuir naturel.

Le procédé consiste donc, à l'inverse de ce qui existe dans l'art antérieur, à déposer la colle 4 sur les parois internes de la coiffe 1 préalablement disposée dans le conformateur froid 2, soit directement, soit indirectement via la matelassure de mouse 5, puis à chauffer à haute température la surface de la matelassure de mousse 5 préalablement encollée ou non par un rayonnement issu de lampes ou tubes infrarouges 9 et, enfin, à appliquer la matelassure de mousse 5 préalablement encollée ou non ainsi chauffée sur les parois internes de la coiffe 1 enduite de colle 4, de sorte que la chaleur de la surface de la matelassure 5 est transmise instantanément, par contact direct avec la colle 4, déterminant un durcissement extrêmement rapide de ladite colle 4, d'une durée de 2 à 10 secondes, sans que le matériau constitutif de la coiffe 1 soit affecté, car l'énergie calorifique est quasiment entièrement absorbée par la colle 4 et la doublure de mousse, de sorte que la température de la coiffe 1 ne dépasse jamais 40 degrés centigrades.

Afin de permettre un verrouillage et un positionnement parfait de la matelassure de mousse 5 sur le plateau porteur 11, un procédé consiste, comme le montrent plus particulièrement les figures 13 à 15 des dessins annexés, à réaliser, au préalable, par moulage ladite matelassure en mousse 5, à la munir, sur sa face de support destinée à coopérer avec le plateau porteur 11, de cavités 12 pourvues chacune d'un moyen de positionnement et de verrouillage 13, à monter ladite matelassure 5 sur le plateau porteur 11 et à la verrouiller sur ce dernier par coopération avec des dispositifs de centrage expansibles 14. Ce procédé ne fait cependant pas partie de l'invention en tant que telle

Comme le montre la figure 13, la matelassure est réalisée par moulage dans un moule constitué par une cuve 15 et par un couvercle 16, ledit couvercle 16 étant, par exemple, monté sur des charnières permettant un positionnement parfaitement précis sur la cuve 15.

Le couvercle 16 est équipé de plots 17 vissés, soudés ou d'une seule pièce avec ledit couvercle 16 et pourvus chacun, par emmanchement légèrement forcé, d'une rondelle 13, formant le moyen de positionnement et de verrouillage, en matière rigide destinée à être transférée dans la surface correspondante de la matelassure après moussage et démoulage de cette dernière.

Les plots 17 sont préférentiellement cylindriques, d'une hauteur de 20 mm et d'un diamètre très légèrement supérieur à 18 mm, par exemple dc 18,1 mm à 18,3 mm. En fonction de la taille de la matelassure de mousse 5, le nombre de ces plots 17 peut varier de 2 à 8.

Les rondelles 13, qui peuvent être en carton compact ou en toute autre matière rigide recyclable, ont, de préférence, un diamètre extérieur de 50 mm et un diamètre intérieur de 18 mm, soit très légèrement inférieur au diamètre des plots 17, ce qui permet de garantir leur tenue sur ces plots 17 avant et pendant le moussage, l'épaisseur de ces rondelles 18 variant de 0,5 mm à 3 mm.

Bien entendu, les dimensions indiquées pour les plots 17 et les rondelles 13 ne sont pas limitatives et peuvent varier, par exemple, pour les plots 17 d'une hauteur de 15 mm à 30 mm et d'un diamètre de 15 mm à 25 mm, tandis que les rondelles 13 seraient de dimension calibrée en fonction des plots 17 les recevant.

Ainsi, dans le moule de moussage selon la figure 13, on coule un mélange moussant de polyuréthane puis on ferme le couvercle 16. Le mélange moussant s'expanse, remplit tout le moule et encapsule partiellement les rondelles 13 qui avaient été emmanchées sur les plots 17. Ces derniers déterminent simultanément dans la mousse des cavités 12 concentriques aux rondelles 13.

Après polymérisation de la mousse, le couvercle 16 est ouvert et la matelassure de mousse 5, qui présente des cavités 12 correspondant à l'espace occupé par les plots 17 du couvercle 16, est démoulée, les rondelles 13 étant solidement encapsulées partiellement à la surface de la matelassure de mousse 5 à l'endroit des cavités 12. Ce mode de réalisation permet un positionnement parfait des rondelles 13 des matelassures de mousse 5, de façon totalement répétitive.

Ce procédé de moulage avec insertion de rondelles permet l'obtention de moyens de positionnement et de verrouillage 13 de la matelassure de mousse 5 sur un plateau porteur 11, comme indiqué dans la description ci-après, garantissant lorsque le plateau porteur 11 est amené mécaniquement sur un conformateur 2, un centrage parfait de la matelassure de mousse 5 sur la coiffe 1.

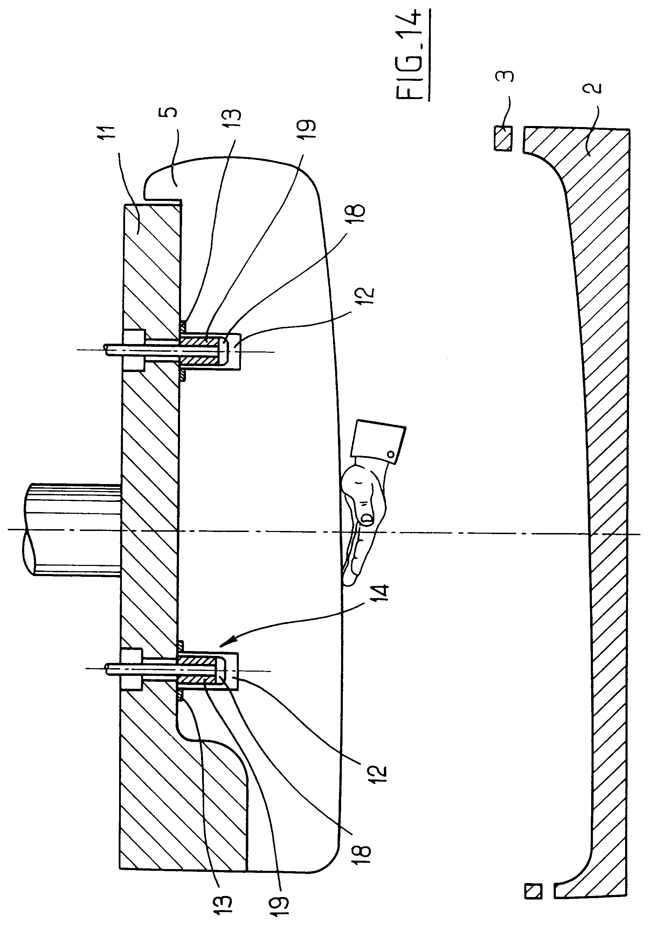

La figure 14 des dessins annexés représente, le plateau porteur 11 équipé de dispositifs de centrage expansibles 14. Le diamètre de ces dispositifs 14 est de 16 mm et leur hauteur égale ou inférieure à 20 mm à l'image de la profondeur des cavités 12 déterminée par les plots 17. Ces dispositifs 14 sont schématiquement constitués chacun par un petit vérin pneumatique 18 enserré par une bague 19 en caoutchouc souple ou matière analogue. Lorsque les petits vérins 18 sont actionnés vers le haut (figure 9), ils compriment les bagues en caoutchouc 19 en leur donnant une forme à tendance sphérique d'un diamètre atteignant dès lors 20 mm.

La figure 14 montre le positionnement aisé de la matelassure de mousse 5 sur le plateau porteur 11, le diamètre intérieur des rondelles 13 étant supérieur à celui des dispositifs 14 qui s'insèrent dans les cavités 12.

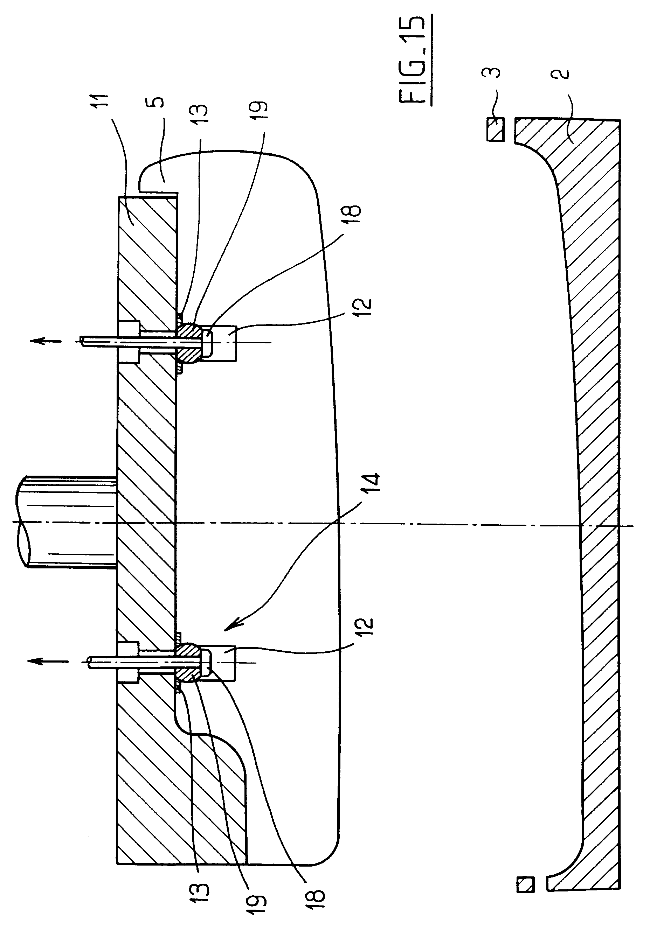

La figure 15 représente, après actionnement des vérins 18, la déformation des bagues de caoutchouc 19, qui a pour effet une augmentation de leur diamètre, ce qui entraîne, d'une part, un centrage parfait de la matelassure de mousse 5 sur le plateau porteur 11 et, d'autre part, son verrouillage sur ledit plateau porteur 11 par la pression qu'exercent les bagues de caoutchouc 19 déformées contre le diamètre intérieur des rondelles 13. Le déverrouillage s'opère de façon inverse en actionnant les petits vérins 18 vers le bas, décomprimant les bagues en caoutchouc 19, qui reviennent en position de repos à leur diamètre initial de 16 mm, ce qui a pour effet de libérer les rondelles 13 et par là même la matelassure de mousse 5.

Les dimensions indiquées pour les dispositifs de centrage expansibles 14 ne sont bien entendu pas limitatives. Les dispositifs 14 seront calibrés en toutes dimensions à l'image de la taille des plots 17 et des rondelles 13.

La prévision de moyens de positionnement et de verrouillage 13, disposés de manière parfaitement précise et reproductible, en surface de la mousse formant la matelassure 5, permet de positionner cette dernière au moyen des dispositifs de centrage expansibles 14 et de la verrouiller sur le plateau porteur 11 et, de ce fait, de réaliser un positionnement exact de la matelassure de mousse sur la coiffe évitant tous les défauts connus à ce jour, à savoir les lignes de couture mal positionnées, les faux-plis, etc.

La présente invention a été décrite à propos d'une matelassure en mousse de polyuréthane. Cependant, le procédé selon l'invention est également applicable dans le cas où la matelassure est constituée de mousse de latex, de crin caoutchouté ou de fibres polyester entrelacées.

Enfin, le procédé est applicable à une matelassure en mousse de polyuréthane fabriquée indifféremment par moulage ou par découpe à partir d'un bloc de mousse.

Grâce à l'invention, il est possible de réaliser la solidarisation d'une coiffe sur une matelassure en forme, notamment en mousse de polyuréthane, en particulier pour la réalisation de coussins de siège, en effectuant une suite d'opérations permettant, avec utilisation d'un conformateur froid, une polymérisation quasi-instantanée de l'adhésif entre la coiffe et la matelassure, ce sans risque de détérioration ou d'altération de la surface visible de la coiffe.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini dans les revendications.

## Revendications

1. Procédé de solidarisation par collage d'une coiffe sur une matelassure en forme, notamment en mousse de polyuréthane, en particulier pour la réalisation de coussins de siège, qui consiste essentiellement à disposer une coiffe (1) dans un conformateur froid (2) et à la fixer à ce dernier au moyen d'un cadre de maintien (3), puis à appliquer indirectement une colle (4) sur les parois internes de la coiffe (1) par transfert d'une partie de ladite colle (4) préalablement appliquée par pulvérisation sur la matelassure de mousse (5) lors d'une brève mise en contact de cette dernière avec les parois internes de la coiffe (1), à chauffer ensuite rapidement à haute température non seulement la surface de la matelassure (5) destinée à coopérer avec les parois internes de la coiffe (1), mais aussi simultanément à la même température la couche de colle (4) demeurée sur ladite matelassure de mousse (5), ce qui, d'une part, provoque la fusion de la couche de cire constituant l'essentiel de la peau de moulage de ladite matelassure de mousse (5), et, d'autre part, polymérise ladite couche de colle pour former une surface d'accrochage qui favorisera grandement le futur collage, à interrompre le chauffage après atteinte d'une température prédéterminée et à appliquer immédiatement la matelassure de mousse (5) ainsi chauffée sur les parois internes de la coiffe (1) enduites de la colle (4), de manière a réaliser une transmission instantanée de chaleur par contact direct avec la colle (4) entraînant un durcissement extrêmement rapide de celle-ci, puis à ouvrir le conformateur froid (2) et à retirer la matelassure (5) munie de sa coiffe (1).

2. Procédé, suivant la revendication 1, caractérisé en ce que le conformateur froid (2) est constitué indifféremment en matière synthétique, en tôle, en fonte ou en différents composites.

3. Procédé, suivant la revendication 1, caractérisé en ce que la colle (4) est tout d'abord appliquée par pulvérisation au moyen d'un pistolet sur la surface de la matelassure de mousse (5), cette dernière étant ensuite mise au contact des parois internes de la coiffe (1) durant un court temps de 0,5 à 2 secondes, seul un quart à un tiers de la quantité de colle (4) étant transféré, durant ce court temps de contact, de la matelassure de mousse (5) vers les parois internes de la coiffe (1), cette très faible quantité de colle (4) transférée et très uniformément déposée sur les parois internes de la coiffe (1) permettant un excellent collage tout en éliminant les risques de défauts par collapsage de la doublure de mousse de ladite coiffe (1).

4. Procédé, suivant la revendication 3, caractérisé en ce que la quantité de colle initialement déposée sur la matelassure de mousse (5) est comprise entre 40 grammes et 60 grammes au mètre carré, la très faible quantité de colle transférée sur les parois internes de la coiffe (1) étant comprise entre 10 grammes et 20 grammes au mètre carré, une quantité de colle de 30 grammes à 40 grammes au mètre carré demeurant sur la matelassure de mousse (5).

5. Procédé, suivant l'une quelconque des revendications 1, 3 et 4, caractérisé en ce que la colle utilisée est une colle de polyuréthane à 100 % d'extraits secs et à deux composants, à savoir 70 % en poids de polyol d'un poids moléculaire de 6000 et d'indice hydroxyle 28, tel que celui connu sous la dénomination commerciale BAYER 3963 de la société BAYER ou un autre polyol de type triol, et 30 % en poids d'isocyanate de type MDI, le mélange étant activé avec un catalyseur aminé de type T.E.D.A.

6. Procédé, suivant l'une quelconque des revendications 1, 3 et 4, caractérisé en ce que la colle utilisée est une colle polyuréthane monocomposant à 100 % d'extraits secs ou additionnées de solvants, une colle de caoutchouc en phase aqueuse ou solvant, une colle de type thermodurcissable ou thermoplastique.

7. Procédé, suivant la revendication 1, caractérisé en ce que le chauffage rapide de la surface de la matelassure de mousse (5) est effectué au moyen d'un caisson (8), dans lequel sont montés des lampes ou des tubes infrarouges (9) portés à une température comprise entre 1 000 degrés à 1 400 degrés centigrades et montés sur des supports réglables par rapport au fond du caisson (8) de manière à être tous à égale distance de la surface de la mousse constituant la matelassure (5).

8. Procédé, suivant la revendication 7, caractérisé en ce qu'il met en oeuvre un caisson (8) monté déplaçable à la manière d'un tiroir entre la surface de la matelassure de mousse (5) et le conformateur (2), les tubes ou lampes infrarouges (9) étant alimentés par un dispositif déconnectable à chaque retrait du caisson (8) de sa position entre la matelassure (5) et le conformateur (2).

9. Procédé, suivant l'une quelconque des revendications 1, 3 et 4, 7 et 8, caractérisé en ce que la cire en fusion est absorbée au sein de la couche de colle et ainsi totalement neutralisée et en ce que la couche de colle polymérisée à très haute température forme une couche sèche légèrement grumeleuse (4bis) solidaire de la surface cellulaire de la matelassure de mousse (5).

10. Procédé, suivant l'une quelconque des revendications 1, 3 et 4, 7 à 9, caractérisé en ce que la mousse constituant la matelassure (5) présente une coloration foncée, préférentiellement gris foncé, conférée à la mousse par addition d'un colorant noir constitué avantageusement de noir de carbone empâté dans un polyol, à raison de 0,1 à 1 partie de colorant pour 100 parties de polyol, pour une mousse de polyuréthane.

## Claims

1. Process for the bonding by adhesion of a cover to a shaped padding, in particular of polyurethane foam, especially for the production of seat cushions, which essentially involves arranging a cover (1) in a cold-shaping device (2) and fixing it thereto by means of a holding frame (3), then indirectly applying an adhesive (4) to the internal walls of the cover (1) by transfer of a portion of said adhesive (4) previously applied by spraying onto the foam padding (5) during brief contact between it and the internal walls of the cover (1), then rapidly heating to a high temperature not only the surface of the padding (5) intended to co-operate with the internal walls of the cover (1) but also simultaneously to the same temperature the layer of adhesive (4) which has remained on said foam padding (5), which, on the one hand, causes the layer of wax constituting the substantial part of the moulding skin of said foam padding (5) to melt and, on the other hand, polymerises said layer of adhesive so as to form a fixing surface which greatly assists future adhesion, interrupting heating after a predetermined temperature has been reached and immediately applying the thus heated foam padding (5) to the internal walls of the cover (1) coated with adhesive (4), so as to bring about instantaneous transmission of heat by direct contact with the adhesive (4) leading to extremely rapid setting thereof, then opening the cold-shaping device (2) and removing the padding (5) equipped with its cover (1).

2. Process according to claim 1, characterised in that the cold-shaping device (2) consists equally well of synthetic material, of sheet metal, of cast iron or of various composite materials.

3. Process according to claim 1, characterised in that the adhesive (4) is firstly applied by means of a gun by spraying onto the surface of the foam padding (5), the foam padding (5) then being placed in contact with the internal walls of the cover (1) for a brief period of 0.5 to 2 seconds, only a quarter to a third of the quantity of adhesive (4) being transferred during this brief period of contact from the foam padding (5) to the internal walls of the cover (1), this very small quantity of adhesive (4), transferred and very uniformly deposited on the internal walls of the cover (1), allowing excellent adhesion while eliminating the risk of defects due to collapse of the foam lining of said cover (1).

4. Process according to claim 3, characterised in that the quantity of adhesive initially deposited on the foam padding (5) is between 40 grams and 60 grams per square metre, the very small quantity of adhesive transferred onto the internal walls of the cover (1) being between 10 grams and 20 grams per square metre, a quantity of adhesive of 30 grams to 40 grams per square metre remaining on the foam padding (5).

5. Process according to any one of claims 1, 3 and 4, characterised in that the adhesive used is a polyurethane adhesive containing 100% of dry extracts and having two components, that is 70% by weight of polyol having a molecular weight of 6,000 and a hydroxyl index of 28, such as the one known by the trade name BAYER 3963 made by the company Bayer or a different polyol of the triol type, and 30% by weight of MDI type isocyanate, the mixture being activated by a T.E.D.A. type amine catalyst.

6. Process according to any one of claims 1, 3 and 4, characterised in that the adhesive used is a single-component polyurethane adhesive containing 100% of dry extracts or additions of solvents, an aqueous phase or solvent rubber adhesive, a thermosetting or thermoplastic adhesive.

7. Process according to claim 1, characterised in that the rapid heating of the surface of the foam padding (5) is effected by means of a box (8) in which there are installed infrared lamps or tubes (9) brought to a temperature of between 1,000°C and 1,400°C and mounted on supports which are adjustable relative to the base of the box (8) so that they are all at the same distance from the surface of the foam constituting the padding (5).

8. Process according to claim 7, characterised in that it employs a box (8) displaceably mounted in the manner of a drawer between the surface of the foam padding (5) and the shaping device (2), the infra-red tubes or lamps (9) being supplied by a device which can be disconnected during each retraction of the box (8) from its position between the padding (5) and the shaping device (2).

9. Process according to any one of claims 1, 3 and 4, 7 and 8, characterised in that the molten wax is absorbed within the layer of adhesive and thus totally neutralised and in that the layer of adhesive polymerised at a very high temperature forms a slightly gritty dry layer (4b) integral with the cellular surface of the foam padding (5).

10. Process according to any one of claims 1, 3 and 4, 7 to 9, characterised in that the foam constituting the padding (5) has dark colouring, preferably dark grey, which is imparted to the foam by the addition of a black colorant advantageously consisting of carbon black pasted in a polyol in a proportion of 0.1 to 1 part of colorant per 100 parts of polyol, for a polyurethane foam.

## Patentansprüche

1. Verfahren zur Verbindung durch Kleben eines Überzuges auf eine Formpolsterung, insbesondere aus Polyurethanschaum, im besonderen für die Herstellung von Sitzkissen, die im wesentlichen darin besteht, einen Überzug (1) in einer Kaltschrumpfvorrichtung (2) anzuordnen und diesen an letzterer mittels eines Halterahmens (3) zu befestigen und danach indirekt einen Klebstoff (4) auf die Innenwände des Überzugs (1) aufzutragen durch Übertragung eines Teils des Klebstoffs (4), der zuvor bei einer kurzen Kontaktaufnahme letzterer mit den Innenwänden des Überzugs (1) durch Zerstauben auf der Schaumpolsterung (5) aufgetragen wurde, darin, dann schnell nicht nur die Oberfläche der Polsterung (5), die dazu bestimmt ist, mit den Innenwänden des Überzugs (1) zusammenzuwirken, auf eine hohe Temperatur zu erwärmen, sondern gleichzeitig auch die Klebstoffschicht (4), die auf der Schaumpolsterung (5) verblieben ist, auf die gleiche Temperatur zu erwärmen, was einerseits die Schmelzung der Wachsschicht, die den wesentlichen Teil der Formhaut der Schaumpolsterung (5) ausmacht, hervorruft und andererseits die Klebstoffschicht polymerisiert, um eine Befestigungsoberfläche zu bilden, die die künftige Verklebung sehr begünstigen wird, darin, die Erwärmung nach Erreichen einer vorbestimmten Temperatur abzubrechen und darin, sofort die so erwärmte Schaumpolsterung (5) auf die Innenwände des Überzugs (1), bestrichen mit dem Klebstoff (4), so aufzutragen, daß eine sofortige Übertragung von Wärme mittels direktem Kontakt mit dem Klebstoff (4) erfolgt, was zu einem extrem raschen Härten desselben führt, des weiteren darin, die Kaltschrumpfvorrichtung (2) zu öffnen und die Polsterung (5), ausgestattet mit ihrem Überzug (1), herauszunehmen.

2. Verfahren nach Anspruch 1, dadurch gekennzeichnet, daß die Kaltschrumpfvorrichtung (2) entweder aus synthetischem Material, aus Blech, aus Guß oder aus verschiedenen Verbundstoffen hergestellt ist.

3. Verfahren nach Anspruch 1, dadurch gekennzeichnet, daß der Klebstoff (4) zunächst durch Zerstäubung mittels einer Pistole auf die Oberfläche der Schaumpolsterung (5) aufgetragen wird, wobei letztere danach mit den Innenwänden des Überzugs (1) für eine kurze Zeitspanne von 0,5 bis 2 Sekunden in Kontakt gebracht wird, wobei während dieser kurzen Zeit des Kontaktes nur ein Viertel bis zu einem Drittel der Menge des Klebstoffes (4) von der Schaumpolsterung (5) zu den Innenwänden des Überzugs (1) übertragen wird, wobei diese sehr geringe Menge an übertragenem Klebstoff (4) sehr gleichmäßig auf die Innenwände des Überzugs (1) aufgetragen wird, wodurch ein hervorragendes Verkleben ermöglicht wird, unter gleichzeitigem Ausschluß der Mängelrisiken durch Zusammenfall des Futters des Schaums des Überzugs (1).

4. Verfahren nach Anspruch 3, dadurch gekennzeichnet, daß die Menge an Klebstoff, die anfänglich auf die Schaumpolsterung (5) aufgetragen wird, zwischen 40 Gramm und 60 Gramm pro Quadratmeter liegt, wobei die sehr geringe Menge an Klebstoff, die auf die Innenwände des Überzugs (1) übertragen wird, zwischen 10 Gramm und 20 Gramm pro Quadratmeter liegt, wobei eine Menge an Klebstoff, die von 30 Gramm bis 40 Gramm pro Quadratmeter reicht, auf der Schaumpolsterung (5) bleibt.

5. Verfahren nach einem der Ansprüche 1, 3 und 4, dadurch gekennzeichnet, daß der verwendete Klebstoff ein Klebstoff aus Polyurethan zu 100 % aus Trockenextraken ist und aus zwei Bestandteilen besteht, nämlich 70 Gewichtsprozent Polyalkohol mit einem Molekulargewicht von 6000 und der Hydroxylzahl 28, sowie jener, der unter der Handelsbezeichnung BAYER 3963 der Firma BAYER bekannt ist, oder einem anderen Polyalkohol des Trioltyps, und 30 Gewichtsprozent Isocyanat des Typs MDI, wobei die Mischung mit einem Katalysator auf Amin-Basis vom Typ T.E.D.A. aktiviert wird.

6. Verfahren nach einem der Ansprüche 1, 3 und 4, dadurch gekennzeichnet, daß der verwendete Klebstoff ein Polyurethanklebstoff aus einem Bestandteil zu 100 % Trockenextrakten ist oder Lösemittelzugaben aufweist, ein Gummiklebstoff aus wäßriger Phase oder einem Lösemittel, ein warmaushärtender oder thermoplastischer Klebstoff ist.

7. Verfahren nach Anspruch 1, dadurch gekennzeichnet, daß die rasche Erwärmung der Oberfläche der Schaumpolsterung (5) mittels eines Kastens (8) erfolgt, in dem Infrarotlampen oder -röhren (9) befestigt sind, die auf eine Temperatur gebracht werden, die zwischen 1000 Grad und 1400 Grad Celsius liegt und auf einstellbaren Stützen im Verhältnis zum Boden befestigt sind, so daß sie alle in gleichem Abstand von der Oberfläche des Schaums sind, aus dem die Polsterung (5) besteht.

8. Verfahren nach Anspruch 7, dadurch gekennzeichnet, daß ein Kasten (8) eingesetzt wird, der beweglich in der Art einer Schublade zwischen der Oberfläche der Schaumpolsterung (5) und der Schrumpfvorrichtung (2) befestigt ist, wobei die Infrarotröhren oder -lampen (9) durch eine Vorrichtung versorgt werden, die bei jeder Zurücknahme des Kastens (8) von seiner Position zwischen der Polsterung (5) und der Schrumpfvorrichtung (2) herausziehbar ist.

9. Verfahren nach einem der Ansprüche 1, 3 und 4, 7 und 8, dadurch gekennzeichnet, daß das schmelzende Wachs mitten in der Klebstoffschicht aufgenommen und so völlig neutralisiert wird, darin daß die bei sehr hoher Temperatur polymerisierte Klebstoffschicht eine trockene, leicht körnige (4bis) Schicht bildet, die mit der zellförmigen Oberfläche der Schaumpolsterung (5) verbunden ist.

10. Verfahren nach einem der Ansprüche 1, 3 und 4, 7 bis 9, dadurch gekennzeichnet, daß der Schaum, aus dem die Polsterung (5) besteht, eine dunkle Färbung aufweist, vorzugsweise dunkelgrau, die auf den Schaum durch Zugabe eines schwarzen Farbstoffes übertragen wird, der vorteilhafterweise aus Rußschwarz besteht, das in einem Polyalkohol dick eingemengt ist, in der Größenordnung von 0,1 bis 1 Farbstoffteil für 100 Polyolteile, für einen Polyurethanschaum.
